(19) Europäisches Patentamt
European Patent Office
Office européen des brevets

(11) EP 3 770 342 A1

(12) EUROPEAN PATENT APPLICATION

(43) Date of publication:
**27.01.2021 Bulletin 2021/04**

(21) Application number: **19382633.6**

(22) Date of filing: **24.07.2019**

(51) Int Cl.:
***E02F 9/26*** *(2006.01)* ***E02F 9/28*** *(2006.01)*
***H04Q 9/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Metalogenia Research & Technologies S.L.**
**08005 Barcelona (ES)**

(72) Inventors:
- **Márquez Llinàs, Jordi**
  **08223 Terrassa (ES)**
- **Rodríguez Serra, Guillermo**
  **08758 Cervelló (ES)**
- **Ferrandiz Borras, Vicent**
  **08174 Sant Cugat del Valles (ES)**

(74) Representative: **Curell Suñol S.L.P.**
**Via Augusta 21**
**08006 Barcelona (ES)**

# (54) METHOD FOR MONITORING A STATUS OF ATTACHMENT OF A GROUND ENGAGING TOOL, CORRESPONDING SYSTEM AND MACHINE

(57) The present invention relates to a fall detection method, corresponding system and machine, for detecting the fall of a wear element (1) provided with a three-axis accelerometer (3) of an earth moving machine (2) with the following steps:
- obtaining an accelerometer measurement (100) of each wear element (1);
- determining a rotational position measurement (102) of each wear element (1) with respect to the reference axis (4) based on its accelerometer measurement (100);
- determining a mean reference value (103) based on all the rotational position measurements (102);
- determining a deviation value (104) of each wear element (1) based on the deviation between its rotational position measurement (102) with respect to the mean reference value (103);
- determining that there is a fall of a wear element (1) if its deviation value (104) exceeds a threshold value (105); and
- repeating the steps in an iterative manner.

1
1
1
1
1
4
Z
Y
X
4
4
FIG. 1

EP 3 770 342 A1

Printed by Jouve, 75001 PARIS (FR)

## Description

Field of the invention

The invention is comprised in the field of earth moving machines, for example, excavators, provided with replaceable wear elements that contact the earth to perform works, such as excavation works. In the field of the art, these wear elements are also known with the name ground engaging tools (GETs). They comprise elements such as:

- teeth: they have the function of penetrating the ground and protecting the blade of the excavator shovel;
- tooth adapters: they have the function of protecting the blade and bearing teeth;
- front guards: they have the function of protecting the lip in the areas comprised between the teeth and also perform penetration function, but to a lesser degree than the teeth; and
- side guards: they protect the sides of the excavator bucket.

More specifically, the invention relates to a fall detection method for detecting the fall of a wear element from among a plurality of wear elements of an earth moving machine, in which each wear element is provided with a three-axis accelerometer. Said accelerometer is formed as a single element or by several individual accelerometers which, together, are capable of providing measurements with respect to three axes.

The invention also relates to a fall detection system implementing the preceding method, as well as to an earth moving machine provided with said fall detection system.

State of the Art

In the sector of earth moving machines, due to the harsh working conditions, the falling of some wear elements sometimes occurs and these fallen elements in many cases mix with soils and rocks that are being moved by the machine. This poses several problems including, firstly, the financial loss for replacing the wear element. Secondly, the machine begins to work in a less efficient manner because it has lost one of its earth contact elements. Furthermore, the part of the machine where the wear element is fixed may be damaged. For these reasons, in the present cases, if the operator suspects that a wear element may have fallen, he/she must stop the machine as soon as possible for inspection, which entails a loss of time and productivity resulting in financial loss. Moreover, the element can be mixed with the excavated soil and, for example, in the case of an installation for extracting minerals that must be ground, if the wear element enters the grinder and can cause serious damage thereto. This point is particularly problematic regarding safety because it would imply that an operator must access the grinder manually to extract the tooth from inside it. Generally, this involves a direct action by the operator, subsequently putting his/her physical integrity at risk.

For these reasons, earth moving machines have begun to be provided with methods and systems for detecting the fall of wear elements.

Some known methods are based on incorporating a transmitter in each wear element, and one or more receivers receiving the signals from said transmitters, usually through a radiofrequency link. In this way, if the receiver loses contact with said transmitter, it can be assumed that the wear element has fallen.

However, solutions of this type have the drawback that, in cases in which the wear element falls in a place close to the receiver, contact with the transmitter may not be lost, and therefore, the fall is not detected. That is particularly important in the case in which the earth moving machine is an excavator provided with a shovel and the wear elements are teeth of said shovel. In cases of this type, if the wear element falls inside the shovel, it is likely that the fall is not detected until said shovel is emptied. If the emptying is performed into a grinder, the grinder may become damaged due to the presence of the fallen wear element.

For these reasons, there is a need to provide an improved wear element detection method for earth moving machines.

Description of the Invention

The objective of the invention is to provide a fall detection method for detecting the fall of a wear element from among a plurality of wear elements of an earth moving machine of the type indicated above, which allows solving the problems described above.

Another objective of the invention is a fall detection system for detecting the fall of a wear element from among a plurality of wear elements of an earth moving machine, as well as an earth moving machine provided with said system.

This purpose is achieved by means of a fall detection method of the type indicated above, characterized in that at least one reference axis is selected, and said method comprises the following steps when said earth moving machine is in an operative state:

a) for each of said wear elements, obtaining an accelerometer measurement of said wear element provided by said three-axis accelerometer of said wear element;

for each of said at least one reference axis:

b) for each of said wear elements, determining a rotational position measurement with respect to said reference axis of said wear element based on said accelerometer measurement of said wear element;

c) determining a mean reference value based on said rotational position measurements of each of said wear elements;

d) for each of said wear elements, determining a deviation value of said wear element based on the deviation between said rotational position measurement of said wear element with respect to said mean reference value;

e) for each of said wear elements, determining that there is a fall of said wear element if said deviation value of said wear element exceeds a threshold value; and

f) repeating steps (a) to (e) in successive iterations.

In earth moving machines, all the wear elements that act simultaneously are usually aligned or exhibit only small variations in alignment. The alignment is assured, for example, by means of poka-yoke-type positioning elements. Furthermore, calibration strategies can be used to compensate for small variations in alignment. A non-exclusive example is in the case of excavator machines provided with excavating shovels, in which the wear elements are assembled on the lip of said shovel. In that sense, during the normal operation of the earth moving machine, when no wear element falls, all the acting wear elements have the same simultaneous movement. In particular, for a selected reference axis and for a specific time, all the wear elements are located in the same rotational position with respect to said reference axis. If a wear element is located in a position very different from the rest, this can be an indication that said wear element has fallen. The described method therefore determines the position of each of the wear elements, and with the position measurements of all the elements the method enables detecting the fall of one (or even more) of the wear elements through comparison with the rest, and not only through isolated data relating to said wear element.

To determine said rotational position measurements, three-axis accelerometers provided in each of said wear elements are used. In particular, the three-axis accelerometers generally provide the acceleration components for each of their X'Y'Z' axes. Given that each wear element is provided with an accelerometer, when said wear element moves, its corresponding accelerometer provides acceleration measurements with respect to each of its X'Y'Z' axes depending on the movement of said wear element. The skilled person will understand that said acceleration further comprises the action of any gravitational field in which the accelerometer is located, so even in the cases in which the wear element is still or performing a rectilinear movement at constant speed, said three-axis accelerometer provides measurements according to said gravitational field. Therefore, given that the known earth moving machines are typically used on the outer surface of the Earth, the accelerometer measurements will always include an acceleration factor corresponding to a vertical vector descending towards the center of the Earth, with an approximate acceleration of $9.8\ m{\cdot}s^2$, also expressed as 1 g. In particular, it has been verified that in some cases this is the primary factor for the common operations of earth moving machines, even when they are working, given that the accelerations subjected by said machine to the wear elements are oftentimes much lower compared to the terrestrial gravitational pull. It is therefore possible to use accelerometers to determine rotational position measurements of the wear elements with respect to a coordinate system made up of said selected reference axes. In this document, said rotational position with respect to an axis will also be referred to as orientation with respect to an axis. As an example, assuming a coordinate system with orthogonal reference axes X, Y, and Z, in which axes X and Y are parallel to the ground and axis Z is vertical, the three-axis accelerometers allow obtaining orientation measurements with respect to axes X and Y. In this case, it is no possible to obtain rotational position measurements with respect to axis Z by means of the accelerometers because, for that case, there are no changes in the value of the force of gravitational pull. For this component, the use of other devices, such as gyroscopes, would be required.

The skilled person will understand that it may be necessary to perform suitable calculations for changing the coordinates between the axes of the accelerometer and the selected reference axes. In this sense, the accelerometer measurements may comprise different raw or previously processed measurements, data, for example, for transforming the coordinate system if the accelerometer is not aligned with the selected reference axes.

For each reference axis, based on said measurements of the rotational position with respect to said reference axis, an average of the rotational positions of all the wear elements is obtained and it is determined that a wear element has fallen if said average deviates beyond a threshold.

Therefore, if one of the wear elements exhibits movement or rotational position characteristics departing from the rest of the wear elements, it can be an indication that said wear element has come off. Unlike the known art, this detection takes place even in the case in which the element falls at a point close to the machine. In fact, with the method herein described connection loss with the wear element is not required in order to determine that the element has indeed fallen. In general, fall detection based on a connection loss is not reliable. Connection loss is common due to situations such as the environmental conditions or the type of soil being moved, thus leading to false positives. Furthermore, detection by connection loss means that the signal must not be one of too high power because it would, otherwise, be received at all times, even when the element has fallen. This makes it necessary to use power that is low enough for connection to be lost the moment the element come off the machine. In comparison, the solution herein indicated allows using radiofrequency links that emit with more power, facilitating the subsequent localization of a fallen wear element.

It must be pointed out that accelerometers with free fall detection function are known. A skilled person may be inclined to use this function for fall detection. However, the drawback of this solution is that if the wear element does not actually fall freely, for example due to an impact or a rebound, this function would not be able to detect said fall. Furthermore, false detections may arise if the working speed of the machine is close to the free falling speed.

It is possible for the fallen element to remain in an orientation that does not allow distinguishing it from the rest if the method is performed for a single reference axis. For this reason, in some preferred embodiments the method uses at least two reference axes.

Regarding the mean reference value described in step (c), the skilled person will understand that different formulations can be used to obtain representative values. As non-excluding examples, it may comprise an arithmetic mean, a weighted mean, a geometric mean, a harmonic mean, a quadratic mean, a median, or a mode, among others, or even calculations derived from the foregoing and/or combinations thereof, provided that said mean reference value can serve as an indication of the general state of the system and be used in the subsequent comparison with respect to each wear element. Similarly, the deviation value described in step (d) can be obtained using different formulations as long as they are suitable for indicating a divergence between the measurements of each wear element with respect to said reference value. As a non-excluding example, it can be a direct or absolute value subtraction between the mean reference value and the value for the wear element. This example is particularly advantageous when the mean reference value corresponds with the arithmetic or weighted mean. Other non-excluding examples comprise other distance calculations even based on non-Euclidean geometries. Based on the way of obtaining of said mean reference value and said deviation values, the skilled person will have no problems in determining said threshold value, for example, by means of prior calculations modeling the operation of the earth moving machine and its wear elements, by means of field tests or combinations of both.

Preferred embodiments the features of which are described in the dependent claims have been provided based on the invention defined in the main claim.

Preferably, each of said three-axis accelerometers comprises a single accelerometer device providing acceleration measurements with respect to each of its three orthogonal axes X'Y'Z', which entails a compact option and allows manufacturing wear elements with a wide range of sizes and shapes.

Preferably, each of said three-axis accelerometers comprises three single-axis accelerometers, such that the measurement of the corresponding three-axis accelerometer is a composition of the measurements of each of the single-axis accelerometers. This option allows selecting with great flexibility the axes to be measured through the positioning of said three single-axis accelerometers.

Preferably, said accelerometers are piezoelectric accelerometers having characteristics that are particularly advantageous in terms of volume, strength, and power consumption.

Preferably, each of said three-axis accelerometers is arranged in alignment with its respective wear element. Each accelerometer is therefore provided in its respective wear element and arranged such that its axes of coordinates coincide with the axes of coordinates of the wear element. This option simplifies the calculation method given that it is not required to transposition the coordinates between the coordinate system of the accelerometer and the coordinate system of its corresponding wear element.

Preferably, the interval between said successive iterations is between 0.5 and 15 seconds, which constitutes an advantageous range for the common usage conditions of the wear elements. The skilled person will have no problems in selecting the time of said interval considering factors such as the power consumption of the accelerometer (particularly if it works by means of batteries), as well as the working speed and rate of the earth moving machine. Likewise, in the event that the accelerometer measurements are delivered periodically from each wear element but without a perfect synchronization between the different wear elements, it is convenient that the intervals are small in relation to the speed of movement of the wear elements. Indeed, for this case it is necessary for the accelerometer measurements to be transmitted with an interval equal to or less than the interval between said successive iterations. If said transmissions are not synchronized, the accelerometer measurements arrive at different moments for each interval. If the earth moving machine is working, said different moments entail different positions and/or orientations of the wear elements. If the interval is not small in relation to the movement, it may happen that one of the wear elements is erroneously determined as having fallen because it has an orientation departing from the rest. Preferably, said interval is 1 second, which entails a favorable ratio between power consumption and interval period for excavator-type machines.

Preferably, in each iteration, steps (b) to (e) are performed considering only the wear elements for which said accelerometer measurements are available for said iteration. The contribution of the wear elements for which an accelerometer measurement is not available, for example, due to communication problems or the falling of the wear element itself, is therefore dismissed. This option allows adapting to transitory situations such as, for example, an occasional communication loss, as well as to situations of change such as, for example, the falling of a tooth or a malfunction in one of the accelerometers.

An advantageous embodiment comprises the following additional step:

- determining that there is a connection loss of a wear element in the event that none of said accelerometer measurements of said wear element is available during N successive iterations;

N being a number greater than or equal to 1. It is therefore possible to improve fall detection by means of determining disconnection, which increases the number of cases in which anomalies are detected for a wear element. For this embodiment, when there are N or more successive iterations in which there is no accelerometer measurement for a wear element, it is determined that connection of said element has been lost. The skilled person will have no problem in determining the value of N taking into account the interval between successive iterations.

Preferably, N is a value corresponding to a time between 15 seconds and 15 minutes, more preferably 30 seconds.

Preferably, each of said at least one reference axis is selected such that, for each of said wear elements, said rotational position measurement with respect to said reference axis comprises a pitch inclination measurement or a roll inclination measurement.

Roll, pitch, and yaw inclination measurements are widely known in the art, but clarifying references are provided in the attached drawings. As an example, if each three-axis accelerometer is aligned with its respective wear element and such that the X'Y'Z' axes of the three-axis accelerometer are arranged such that X' corresponds to the horizontal longitudinal axis, Y' to the horizontal transverse axis, and Z' to the vertical axis, the roll and pitch inclination measurements can be determined by means of the following formulae:

$$pitch = \arctan\left(\frac{G_x}{\sqrt{G_z^2 + G_y^2}}\right)$$

$$roll = \arctan\left(\frac{G_y}{\sqrt{G_z^2 + G_x^2}}\right)$$

wherein:

$G_x$ is the accelerometer measurement for axis X' of the three-axis accelerometer,
$G_y$ is the accelerometer measurement for axis Y' of the three-axis accelerometer, and
$G_z$ is the accelerometer measurement for axis Z' of the three-axis accelerometer.

Said accelerometer measurements are expressed in the same units, for example, in milli g or in $ms^2$.

The skilled person will understand that, in this example, X'Y'Z' axes are described relative to the accelerometer, and accordingly, to its wear element. The wear elements usually have an elongated shape and are usually graphically depicted in a horizontal position, so the use of the expressions "horizontal" and "vertical" will therefore be understood as starting from that normal position of representation.

Normally, a yaw inclination measurement cannot be determined by means of accelerometer measurements given that a change in yaw does not cause a change in the force of gravitational pull as this constitutes a rotational movement with respect to a vertical axis.

Preferably, in said step (c), determining a mean reference value is performed by means of a weighted sum of said rotational position measurements of each of said wear elements. It is therefore possible to control the contribution of the measurements of each of the wear elements to said mean reference value. That is particularly advantageous if it is known that one of them provides values with a deviation with respect to the rest. Preferably, if all the wear elements fall within predetermined margins of deviation, said weighting is uniform.

Preferably, in said step (d), said deviation value comprises performing a subtraction between said rotational position measurement and said mean reference value, which entails a simplified operation in terms of calculation and results in a measurement of the linear difference between both values. Preferably, said deviation value comprises obtaining the absolute value of said subtraction, such that a measurement which can be considered as an absolute distance is obtained.

The invention also relates to a fall detection system for detecting the fall of a wear element from among a plurality of wear elements of an earth moving machine, comprising:

- said plurality of wear elements, each wear element being provided with a sensor comprising a three-axis accelerometer, and wherein said sensor is configured for emitting accelerometer measurements provided by said three-axis accelerometer;
- a control module configured for:
    - receiving said accelerometer measurements; and
    - carrying out the method described above.

This system therefore incorporates the technical advantages that are described in the preceding method and will not be repeated here for the sake of brevity.

The invention also relates to an earth moving machine incorporating a fall detection system as described above.

The invention also covers other detail features illustrated in the detailed description of an embodiment of the invention and in the attached drawings.

## Brief Description of the Drawings

The advantages and features of the invention can be seen from the following description in which preferred embodiments of the invention are described in a non-limiting manner with respect to the scope of the main claim in reference to the drawings

Fig. 1 is a perspective view of an excavator shovel provided with wear elements used in the method of the invention.

Fig. 2 shows a section view of a wear element provided with a three-axis accelerometer therein.

Fig. 3 is a schematic view of an earth moving machine provided with a fall detection system like the one of the invention.

Fig. 4 shows a flow chart of a preferred embodiment of the fall detection method of the invention.

## Detailed Description of Several Embodiments of the Invention

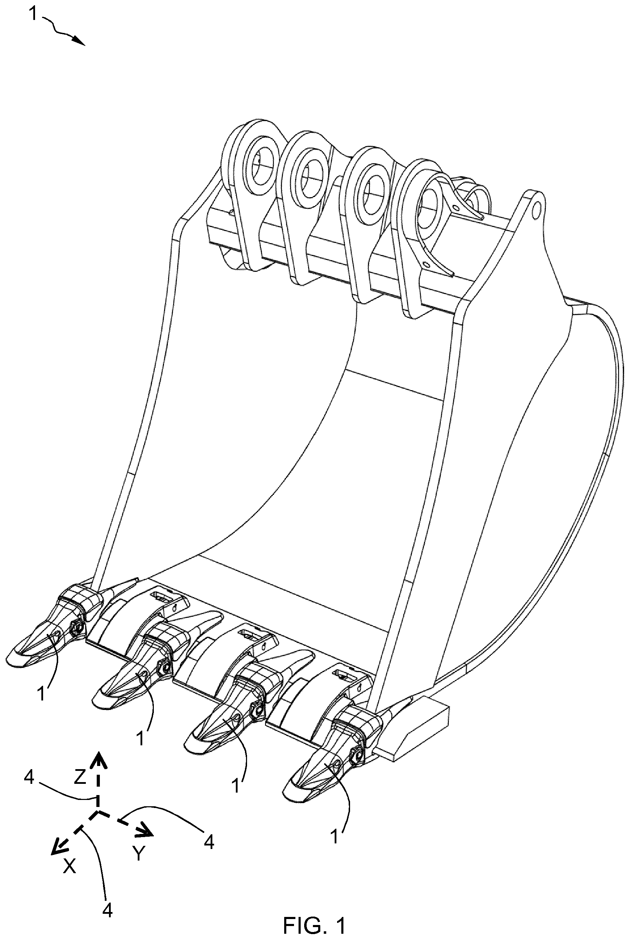

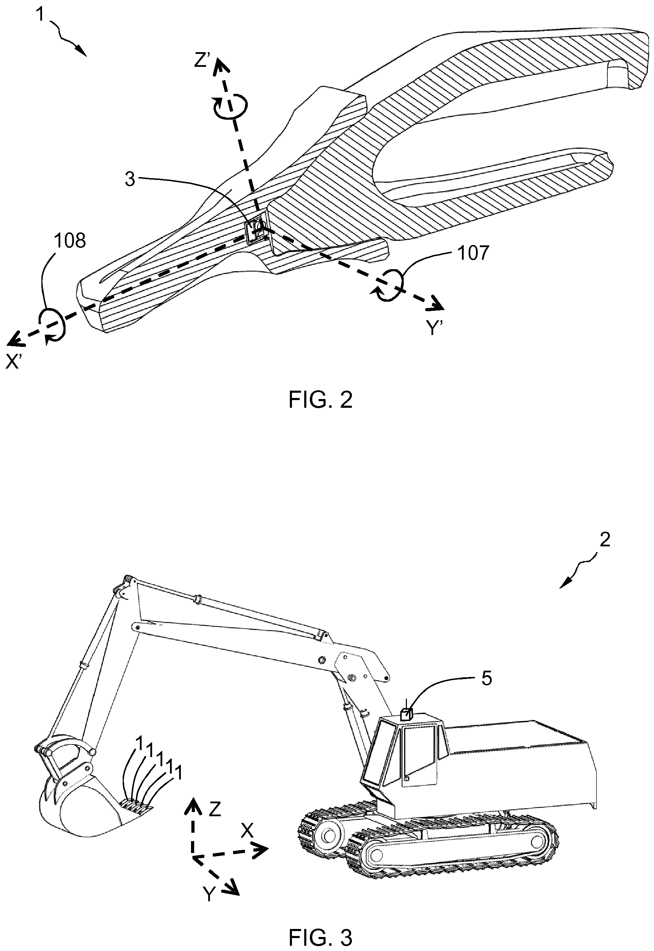

Fig. 3 shows an earth moving machine 2, in this case an excavator, provided with a plurality of wear elements 1, which comprise, for the example, teeth fixed to the shovel of the excavator. Fig. 1 shows a detail of a shovel and Fig. 2 shows a section of one of the teeth.

For the example, the earth moving machine 2 incorporates a fall detection system for detecting the fall of a wear element 1 from among said plurality of wear elements 1 of said earth moving machine 2. The system comprises said plurality of wear elements 1, each wear element 1 being provided with a sensor comprising a three-axis accelerometer 3, and in which said sensor is configured for emitting accelerometer measurements provided by said three-axis accelerometer 3. In the examples, the accelerometer measurements comprise accelerations in the three axes expressed in milli g, in which 1 milli g corresponds to 0.0098 m/s$^2$.

The system also comprises a control module 5, schematically symbolized in Fig. 3, and configured for receiving said accelerometer measurements and carrying out one of the embodiments of the fall detection method described below. For the sake of clarity, the control module 5 has been depicted outside the cabin of the earth moving machine 2, although in some embodiments it can be located inside same. In the example, a high-gain antenna is used to achieve a suitable radiofrequency link, given that the signals emitted from the wear elements have limited power. Other embodiments use several antennas to improve coverage. For most embodiments, said antenna is secured to the outer rail or the ceiling of the machine 2. This last option is the one shown in Fig. 3.

In turn, the operator of the earth moving machine 2 may have at their disposal an interface, for example, a display, on which the alarms and/or parameters of the system are shown.

In some examples, the control module 5 is connected to remote servers for transmitting information. Said connection can be by means of any of the connection means known in the art, for example, a radio link, a connection by means of cellular telephony, etc. These embodiments allow remotely monitoring the system, for example, in relation to the alarms and parameters.

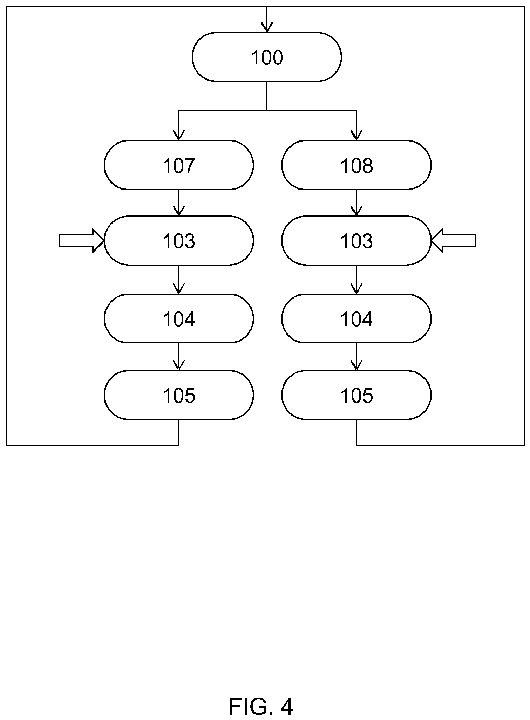

Fig. 4 shows an exemplary embodiment of the fall detection method for detecting the fall of a wear element 1 from among a plurality of wear elements 1 of an earth moving machine 2 according to the invention. For the sake of clarity, Fig. 4 shows the flow chart only for one wear element 1. As mentioned, each wear element 1 is provided with a three-axis accelerometer 3. For the example, each of said three-axis accelerometers 3 comprises a single piezoelectric three-axis accelerometer arranged in alignment with its respective wear element 1. Other embodiments comprise three single-axis accelerometers, as indicated in Fig. 2, having relative axes X'Y'Z'.

In the method of the example, at least one reference axis 4 is selected. In particular, for the exemplary embodiments, axes X and Y indicated in Fig. 1 and Fig. 3 are selected, such that rotational position measurements 102 corresponding to pitch 107, which corresponds to a rotation with respect to axis Y, and to roll 108, which corresponds to a rotation with respect to axis X, are obtained. Fig. 4 shows two branches of the flow chart for one of the wear elements 1: a branch corresponding to pitch 107 and another branch corresponding to roll 108.

Said method therefore comprises the steps described below when said earth moving machine 2 is in an operative state.

A step (a) which comprises, for each of said wear elements 1, obtaining an accelerometer measurement 100 of said wear element 1, provided by said three-axis accelerometer 3 of said wear element 1. In particular, the sensors incorporated in each wear element 1 deliver acceleration values provided by each three-axis accelerometer 3, with respect to its axes X', Y', and Z'. The measurements are received by the control module 5. For each iteration, the following steps are performed considering only those wear elements 1 for which accelerometer measurements 100 are available in said iteration.

For each of said at least one reference axis 4, i.e., for the pitch, on one hand, and for the roll, on the other, the method follows the steps described below.

A step (b) which comprises, for each of said wear elements 1, determining a rotational position measurement 102 with respect to said reference axis 4 of said wear element 1 based on said accelerometer measurement 100 of said wear element 1. In the case of the example, a pitch measurement for reference axis Y, as well as a roll measurement for reference axis X, is obtained.

A step (c) which comprises determining a mean reference value 103 based on said rotational position measurements 102 of each of said wear elements 1. For the sake of clarity, Fig. 4 only shows the flow chart for one of the wear elements 1. However, the contributions of the rotational measurements 102 of all the wear elements 1 are required to determine said mean reference value 103. The contribution of wear elements 1 which are not shown has been depicted with a thick horizontal arrow connected to the box with reference 103.

In the case of the example, said mean reference value 103 is obtained by means of a weighted sum of said rotational position measurements 102 of each of said wear elements 1, initially with the same weighting for each of the wear elements 1.

A step (d) which comprises, for each of said wear elements 1, determining a deviation value 104 of said wear element 1 based on the deviation between said rotational position measurement 102 of said wear element 1 with respect to said mean reference value 103. For the example, said deviation value 104 is obtained as the absolute value of the subtraction between said rotational position measurement 102 and said mean reference value 103.

A step (e) which comprises, for each of said wear elements 1, determining that there is a fall of said wear element 1 if said deviation value 104 of said wear element 1 exceeds a threshold value 105.

The method also comprises repeating steps (a) to (e) in successive iterations. In particular, for the examples, the interval between said successive iterations is 1 second. In this sense, the return arrow between the box labeled with 105 and the initial box labeled with 100 simply indicates a new iteration.

Another embodiment of the method comprises the additional step of determining that there is a connection loss of a wear element 1 in the event that none of said accelerometer measurements of said wear element 1 is available during N successive iterations. In which N is a number greater than or equal to 1, preferably corresponding to 30 seconds.

## Claims

1. A fall detection method for detecting the fall of a wear element (1) from among a plurality of wear elements (1) of an earth moving machine (2), wherein each wear element (1) is provided with a three-axis accelerometer (3);
   **characterized in that** at least one reference axis (4) is selected, and said method comprises the following steps when said earth moving machine (2) is in an operative state:

   a) for each of said wear elements (1), obtaining an accelerometer measurement (100) of said wear element (1) provided by said three-axis accelerometer (3) of said wear element (1);

   for each of said at least one reference axis (4):

   b) for each of said wear elements (1), determining a rotational position measurement (102) with respect to said reference axis (4) of said wear element (1) based on said accelerometer measurement (100) of said wear element (1);
   c) determining a mean reference value (103) based on said rotational position measurements (102) of each of said wear elements (1);
   d) for each of said wear elements (1), determining a deviation value (104) of said wear element (1) based on the deviation between said rotational position measurement (102) of said wear element (1) with respect to said mean reference value (103);
   e) for each of said wear elements (1), determining that there is a fall of said wear element (1) if said deviation value (104) of said wear element (1) exceeds a threshold value (105); and
   f) repeating steps (a) to (e) in successive iterations.

2. The method according to claim 1, **characterized in that** each of said three-axis accelerometers (3) comprises three single-axis accelerometers.

3. The method according to any one of claims 1 or 2, **characterized in that** said accelerometers are piezoelectric accelerometers.

4. The method according to any one of claims 1 to 3, **characterized in that** each of said three-axis accelerometers (3) is arranged in alignment with its respective wear element (1).

5. The method according to any one of claims 1 to 4, **characterized in that** the interval between said successive iterations is between 0.5 and 5 seconds, preferably 1 second.

6. The method according to any one of claims 1 to 5, **characterized in that** in each iteration, steps (b) to (e) are performed considering only the wear elements (1) for which said accelerometer measurements (100) are available for said iteration.

7. The method according to any one of claims 1 to 6, **characterized in that** it comprises the following additional step:

- determining that there is a connection loss of a wear element (1) in the event that none of said accelerometer measurements of said wear element (1) is available during N successive iterations;

N being a number greater than or equal to 1.

**8.** The method according to any one of claims 1 to 7, **characterized in that** each of said at least one reference axis (4) is selected such that, for each of said wear elements (1), said rotational position measurement (102) with respect to said reference axis (4) comprises a pitch measurement (107) or a roll measurement (108).

**9.** The method according to any one of claims 1 to 8, **characterized in that** in said step (c), determining a mean reference value (103) is performed by means of a weighted sum of said rotational position measurements (102) of each of said wear elements (1).

**10.** The method according to any one of claims 1 to 9, **characterized in that** in said step (d), said deviation value (104) comprises performing a subtraction between said rotational position measurement (102) and said mean reference value (103), preferably obtaining the absolute value of said subtraction.

**11.** A fall detection system for detecting the fall of a wear element (1) from among a plurality of wear elements (1) of an earth moving machine (2), comprising:

- said plurality of wear elements (1), each wear element (1) being provided with a sensor comprising a three-axis accelerometer (3), and wherein said sensor is configured for emitting accelerometer measurements provided by said three-axis accelerometer (3);
- a control module (5) configured for:

  ◦ receiving said accelerometer measurements; and
  ◦ carrying out the method according to any one of claims 1 to 10.

**12.** An earth moving machine (2) incorporating a fall detection system according to claim 11.

1
1
1
1
1
1
Z
4
4
4
X
Y

FIG. 1

1
Z'
3
108
107
X'
Y'

FIG. 2

2
5
1
1
1
1
1
Z
X
Y

FIG. 3

100
107
108
103
103
104
104
105
105

FIG. 4

Europäisches Patentamt
European Patent Office
Office européen des brevets

# EUROPEAN SEARCH REPORT

Application Number
EP 19 38 2633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/095536 A1 (SANDVIK INTELLECTUAL PROPERTY [SE]) 31 May 2018 (2018-05-31) * page 16, line 2 - page 16, line 6; claims 12,20; figures * ----- | 1,11 | INV. E02F9/26 E02F9/28 H04Q9/00 |
| A | US 2015/284935 A1 (EGGER DANIEL [AT] ET AL) 8 October 2015 (2015-10-08) * paragraphs [0022] - [0026], [0037] - [0043]; claims; figures * ----- | 1,11 | |
| A | US 2018/298590 A1 (CARPENTER CHRISTOPHER M [US] ET AL) 18 October 2018 (2018-10-18) * paragraph [0116]; figures * ----- | 1,11 | |

TECHNICAL FIELDS SEARCHED (IPC)
E02F
H04Q

The present search report has been drawn up for all claims

1

| Place of search | Date of completion of the search | Examiner |
|---|---|---|
| Munich | 23 January 2020 | Kühn, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 38 2633

This annex lists the patent family members relating to the patent documents cited in the above-mentioned European search report. The members are as contained in the European Patent Office EDP file on
The European Patent Office is in no way liable for these particulars which are merely given for the purpose of information.

23-01-2020

| Patent document cited in search report | Publication date | Patent family member(s) | Publication date |
|---|---|---|---|
| WO 2018095536 A1 | 31-05-2018 | AU 2016430503 A1 | 06-06-2019 |
| | | CA 3044100 A1 | 31-05-2018 |
| | | CN 109983183 A | 05-07-2019 |
| | | EP 3563003 A1 | 06-11-2019 |
| | | PE 20190904 A1 | 26-06-2019 |
| | | US 2019284784 A1 | 19-09-2019 |
| | | WO 2018095536 A1 | 31-05-2018 |
| US 2015284935 A1 | 08-10-2015 | AU 2013304355 A1 | 26-02-2015 |
| | | CA 2880927 A1 | 20-02-2014 |
| | | CL 2015000306 A1 | 23-10-2015 |
| | | DE 102012016004 A1 | 13-02-2014 |
| | | EP 2938789 A1 | 04-11-2015 |
| | | US 2015284935 A1 | 08-10-2015 |
| | | WO 2014026742 A1 | 20-02-2014 |
| | | ZA 201500366 B | 27-01-2016 |
| US 2018298590 A1 | 18-10-2018 | AU 2016219005 A1 | 28-09-2017 |
| | | AU 2016219013 A1 | 05-10-2017 |
| | | AU 2018201628 A1 | 29-03-2018 |
| | | AU 2018201630 A1 | 29-03-2018 |
| | | AU 2018201631 A1 | 29-03-2018 |
| | | AU 2018201632 A1 | 29-03-2018 |
| | | AU 2018201633 A1 | 29-03-2018 |
| | | AU 2018201634 A1 | 29-03-2018 |
| | | AU 2018201635 A1 | 29-03-2018 |
| | | AU 2019201394 A1 | 21-03-2019 |
| | | BR 112017017086 A2 | 10-04-2018 |
| | | BR 112017017214 A2 | 03-04-2018 |
| | | CA 2976372 A1 | 18-08-2016 |
| | | CA 2976374 A1 | 18-08-2016 |
| | | CL 2017002057 A1 | 16-03-2018 |
| | | CL 2017002058 A1 | 16-03-2018 |
| | | CL 2019002016 A1 | 04-10-2019 |
| | | CL 2019002017 A1 | 04-10-2019 |
| | | CN 107208394 A | 26-09-2017 |
| | | CN 107208395 A | 26-09-2017 |
| | | CN 110056036 A | 26-07-2019 |
| | | CN 110067279 A | 30-07-2019 |
| | | CN 110067280 A | 30-07-2019 |
| | | CO 2017009208 A2 | 31-01-2018 |
| | | EA 201791824 A1 | 29-12-2017 |
| | | EP 3256650 A1 | 20-12-2017 |
| | | EP 3256651 A2 | 20-12-2017 |
| | | EP 3530818 A1 | 28-08-2019 |
| | | EP 3530819 A1 | 28-08-2019 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 19 38 2633

This annex lists the patent family members relating to the patent documents cited in the above-mentioned European search report. The members are as contained in the European Patent Office EDP file on
The European Patent Office is in no way liable for these particulars which are merely given for the purpose of information.

23-01-2020

| Patent document cited in search report | Publication date | Patent family member(s) | Publication date |
|---|---|---|---|
| | | EP 3530820 A1 | 28-08-2019 |
| | | EP 3530821 A1 | 28-08-2019 |
| | | JP 2018505331 A | 22-02-2018 |
| | | JP 2019112930 A | 11-07-2019 |
| | | JP 2019112931 A | 11-07-2019 |
| | | JP 2019112932 A | 11-07-2019 |
| | | JP 2019112933 A | 11-07-2019 |
| | | KR 20170116141 A | 18-10-2017 |
| | | KR 20190028573 A | 18-03-2019 |
| | | KR 20190028813 A | 19-03-2019 |
| | | PE 20171393 A1 | 20-09-2017 |
| | | PE 20171437 A1 | 29-09-2017 |
| | | PE 20190877 A1 | 18-06-2019 |
| | | PE 20190878 A1 | 18-06-2019 |
| | | PE 20190879 A1 | 18-06-2019 |
| | | US 2016237640 A1 | 18-08-2016 |
| | | US 2016237657 A1 | 18-08-2016 |
| | | US 2018298588 A1 | 18-10-2018 |
| | | US 2018298589 A1 | 18-10-2018 |
| | | US 2018298590 A1 | 18-10-2018 |
| | | US 2018298591 A1 | 18-10-2018 |
| | | US 2018298592 A1 | 18-10-2018 |
| | | US 2018305901 A1 | 25-10-2018 |
| | | WO 2016131007 A1 | 18-08-2016 |
| | | WO 2016131015 A2 | 18-08-2016 |

EPO FORM P0459

For more details about this annex : see Official Journal of the European Patent Office, No. 12/82

page 2 of 2